# EUROPEAN PATENT APPLICATION

(11) **EP 4 837 465 A1**
(43) Date of publication of application: **11.11.2026**
(21) Application number: 25382462.7
(22) Date of filing: 07.05.2025
(51) Int. Cl.: A47C 4/02, A47C 5/08, F16B 12/32, F16B 12/42

(54) **STRUCTURAL SYSTEM FOR ASSEMBLING FURNITURE WITHOUT TOOLS**

(71) Applicant: Fama Sofas, S.L.U., 30510 Yecla (Murcia) (ES)
(72) Inventor: López Gil, Félix, 30510 Yecla (Murcia) (ES)
(74) Representative: Ballester Cañizares, Rosalia

(57) **Abstract**

The present invention relates to a structural system for assembling furniture without tools comprising a base configured as a board, seat or backrest; a plurality of securing pieces fastened to said base and configured to receive metal rods; a series of rods, with a circular cross-section, insertable in said securing pieces; and a series of hollow steel tubes the inner diameter of which fits with the outer diameter of the rods, configured to couple over the ends of two adjacent rods. The assembly of the elements is carried out exclusively by insertion and pressure, without the need for screws, tools or screwing or welding operations.

## Description

### Object of the invention

The present invention relates to a structural system for assembling furniture, in particular armchairs and tables, which enables them to be assembled and disassembled without using screws, tools or additional accessories.

The object of the invention is to simplify and streamline the furniture assembly process, allowing furniture to be assembled in seconds by any user without technical knowledge, reducing logistics costs, transport volume and the environmental impact associated with its manufacture, distribution and recycling. Likewise, the system also facilitates the repair and reuse of furniture, prolonging its useful life and contributing to the sustainability of furniture products.

### Background of the invention

Various furniture assembly systems are known in the prior art that aim to reduce or eliminate the need for screws and tools, especially in storage furniture such as shelving, bookcases or cupboards. These systems are typically based on assemblies via tongue and groove, press-fit connectors, click systems or snap-fit connections. Although they allow a relatively simple assembly of flat boards, their practical application is limited to structures with low mechanical demands and they are not suitable for seating furniture or tables, which require high structural stability.

In the field of upholstered furniture, such as armchairs or sofas, there are detachable solutions that reduce the transport volume. However, these systems often require screwing operations, the use of specific tools or relatively complex assembly processes. The assembly of this type of furniture by the end user is, in many cases, laborious, increasing installation times, risks of incorrect assembly and the generation of packaging waste.

Furthermore, from an eco-design and sustainability point of view, traditional assembly systems have significant limitations. The use of multiple types of materials, increased transport volume and the difficulty in dismantling and repairing furniture negatively affect the resource efficiency and environmental footprint of the product throughout its life cycle.

The present invention discloses a structural system for the assembly of furniture, in particular armchairs and tables, which effectively solves the above limitations. It allows quick assembly and disassembly without the need for screws or tools, by means of the cooperation of structural elements that are assembled manually by insertion and pressure. The system provides high strength and stability, facilitates the transport and reuse of furniture, reduces the packaging materials required and facilitates the repair or replacement of components, making a significant contribution to the sustainability of the furniture.

### Description of the invention

The technical problem solved by the present invention is that of providing an assembly system for furniture, in particular armchairs and tables, which enables them to be assembled and disassembled quickly, easily and safely, completely eliminating the need for screws, tools or additional accessories, while ensuring high structural stability and a long useful life of the furniture.

To this end, the structural system for assembling furniture without tools, the subject matter of the present invention, comprises a combination of elements that cooperate with each other by means of manual insertion and pressure operations, without requiring mechanical intervention or the use of conventional fastening elements.

The system comprises a series of metal rods, preferably made of steel and having a specific diameter, which are assembled by inserting them into hollow steel tubes with an inner diameter slightly larger than that of the rods, ensuring a tight fit by pressure. These rod and tube assemblies form the primary structure of the furniture.

The rods are in turn fastened to structural boards, such as bases, seats or backrests, to which a number of plastic securing pieces are pre-assembled. These securing pieces are specifically designed to allow the insertion of the rods by means of a tight fit, configuring anchor points that efficiently distribute loads and stabilise the assembly without the need for additional fastenings.

The design of the securing pieces allows the rods to be accepted in different directions, either perpendicularly or forming predetermined angles, which facilitates the formation of different furniture configurations, adapting to various functional and aesthetic requirements. The strategic arrangement of these pieces on the boards, combined with the assembly of the rods and tubes, creates a solid and strong self-supporting structure.

An essential feature of the system is its modularity, which allows repeated assembly and disassembly of the furniture without damaging the connections. This property facilitates the transport, storage and repair of the furniture, contributing to its reusability and prolonging its useful life.

From an environmental point of view, the system has been designed according to eco-design principles. The use of recyclable materials such as steel and plastics with low environmental impact, together with the drastic reduction of transport volume and packaging material required, helps to reduce the ecological footprint of the product.

Thus, through the functional cooperation of rods, steel tubes and plastic securing pieces pre-assembled on boards, the structural system for assembling furniture without tools provides an innovative solution that combines ease of use, mechanical stability, sustainability and logistical efficiency.

### Brief description of the figures

What follows is a very brief description of a series of drawings that aid in better understanding the invention and which are expressly related to an embodiment of said invention that is presented by way of a non-limiting example of the same.

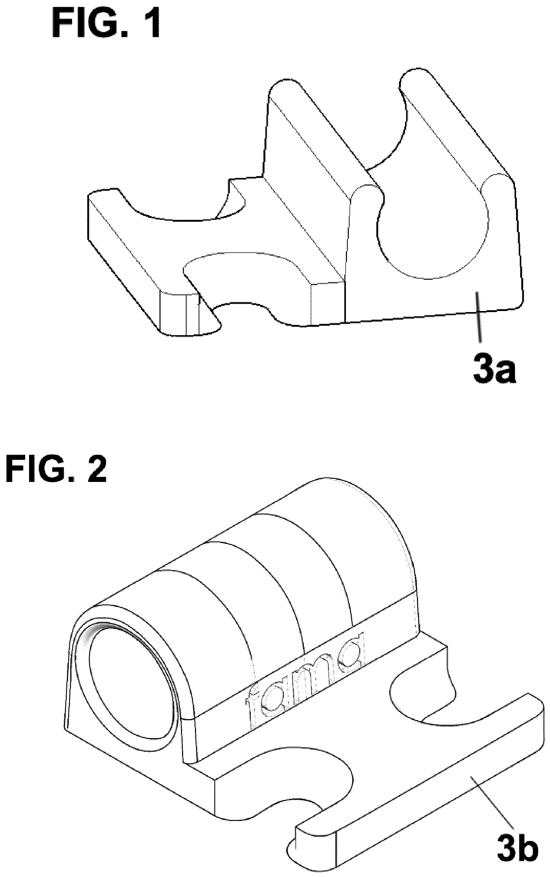

FIG. 1 shows a perspective view of a lower anchoring piece (3a) configured to couple to a structural rod.
FIG. 2 shows a perspective view of an upper anchoring piece (3b), configured to house a rod end and fasten to a structural component of the furniture.
**FIG. 3a** shows a schematic view of the side frames of the metal rod (2) and the arrangement of the connecting tubes therebetween.
**FIG. 3b** shows the connection of the seat module (1) to the side frames by means of several lower (3a) and upper (3b) anchoring pieces.
**FIG. 3c** shows a rear view of the backrest of the piece of furniture already attached by means of upper anchoring pieces (3b).
**FIG. 3d** shows a detailed view of a rod housed in the upper anchoring piece (3b), with its entry into the coupling channel.
**FIG. 4a** represents the initial assembly of the side frames by means of the connecting tubes.
**FIG. 4b** shows a lower structural component of the seat module coupled to the frames, by means of lower (3a) and upper (3b) anchoring pieces.
**FIG. 4c** represents the side assembly of the lower structural components, using the anchoring pieces.
**FIG. 4d** shows a side view of the assembly, highlighting the arrangement of the anchoring pieces (3a and 3b).
**FIG. 4e** represents the attachment of the backrest to the frames by means of upper anchoring pieces (3b).
**FIG. 4f** shows the fastening of the seat module to the frames, highlighting the action of inserting the rods into the anchoring pieces.
**FIG. 4h** depicts an overview of the furniture assembly with all its structural components assembled.
**FIG. 4i** shows an enlarged detailed view of the rod coupled via the upper anchoring piece (3b).
**FIG. 4j** depicts the final engagement of the rod into the lower anchoring piece (3a), completing the seat module assembly.

### Description of a detailed embodiment of the invention

The attached figures show a preferred embodiment of the invention. More specifically, the structural system for assembling furniture without tools comprises a base (1), configured as a board, seat or backrest of the furniture, on which a plurality of securing pieces (3a, 3b), designed to receive one or more metal rods (2), are previously fastened.

The rods (2) are preferably made of steel and have a circular cross-section, with a nominal diameter of 12 millimetres, although they can be manufactured with diameters between 8 and 16 millimetres. These rods are inserted into hollow steel tubes, the inner diameter of which fits the outer diameter of the rod to enable them to be press-fitted together. The rods may have a male and female configuration at the ends thereof to facilitate linear coupling.

The securing pieces (3a, 3b) are made of injected plastic material and are mechanically fastened to the base (1). They are designed to allow the rods (2) to be inserted in one or more directions, by means of semi-cylindrical or convex housings. Some of these pieces have configurations that allow the rods to be inserted transversely, rotated 90 degrees with respect to the plane of the board. Others allow the rod to be locked by means of a rotating or snap-fit movement, offering securing complementary to the press-fit fastening.

The structural assembly is configured by cooperation between the boards with securing pieces, the steel rods and the intermediate hollow tubes, forming a rigid structure without the need for screws, threads or tools. The securing pieces can be arranged in different positions and orientations on the base (1) to allow the assembly of rectangular, trapezoidal or angled configurations between 80° and 110°.

In certain embodiments, securing pieces incorporating more than one insertion area are used, allowing rods to be connected in perpendicular directions or in different planes. The hollow tubes act as intermediate elements between aligned rods, fitting over the opposite ends of two adjacent rods.

The resulting structure consists exclusively of elements that are assembled by direct insertion and manual pressure, without additional fastening operations.

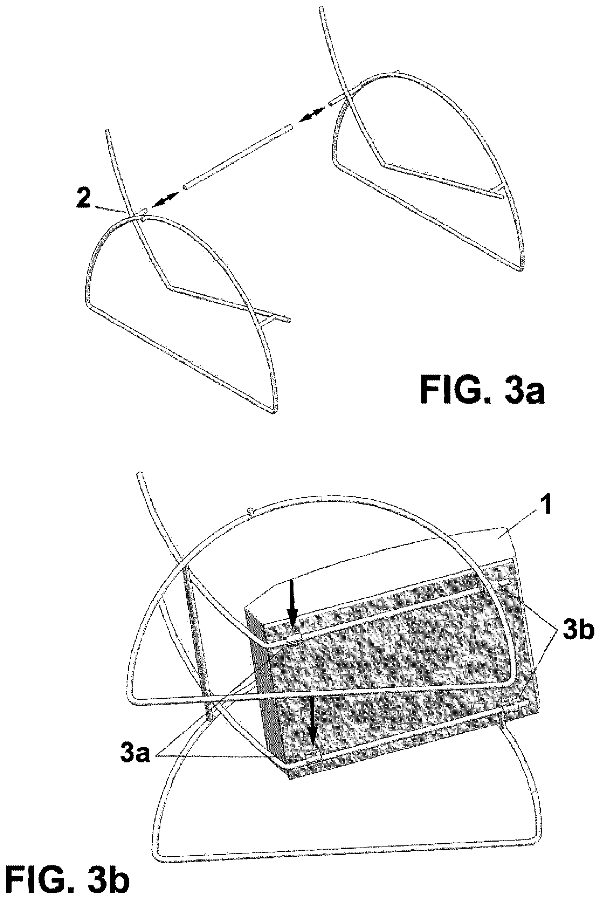

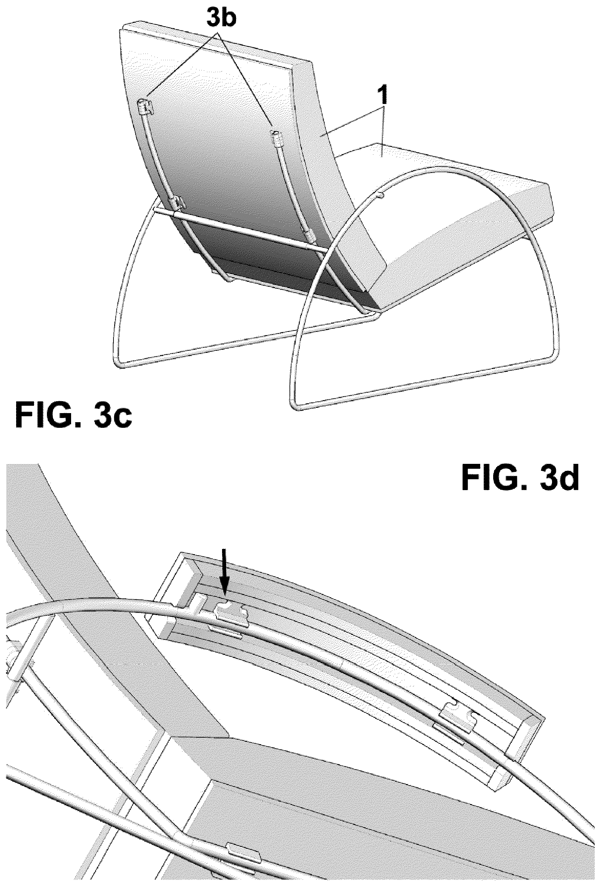

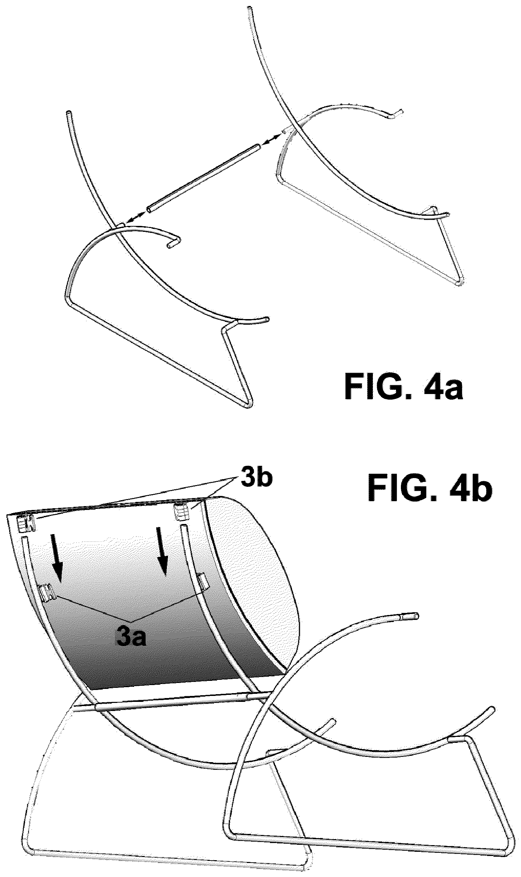

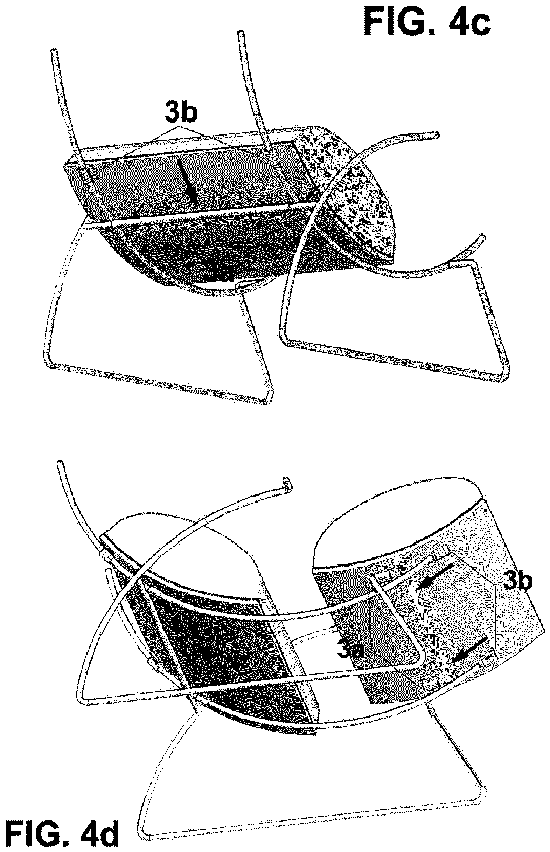

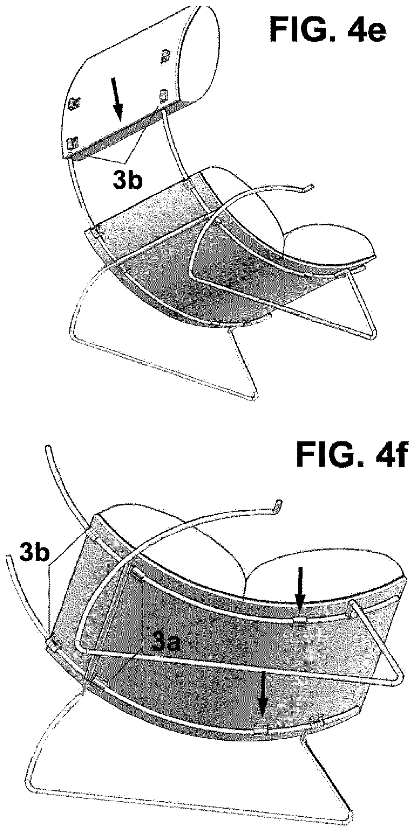

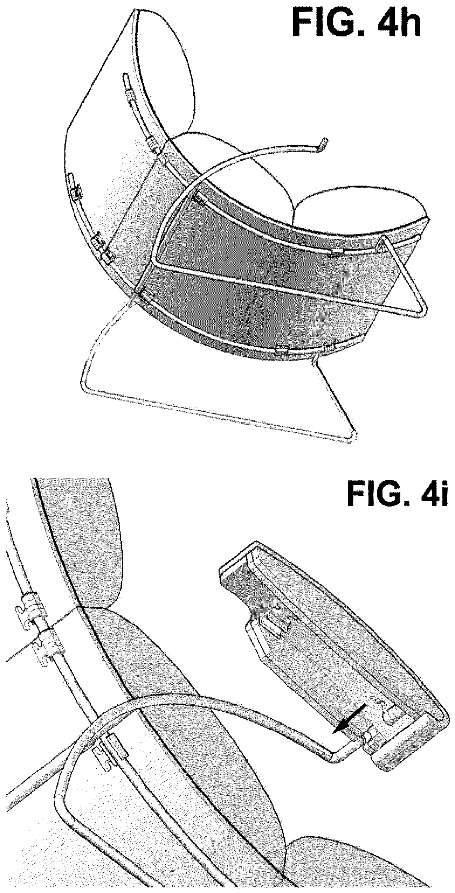

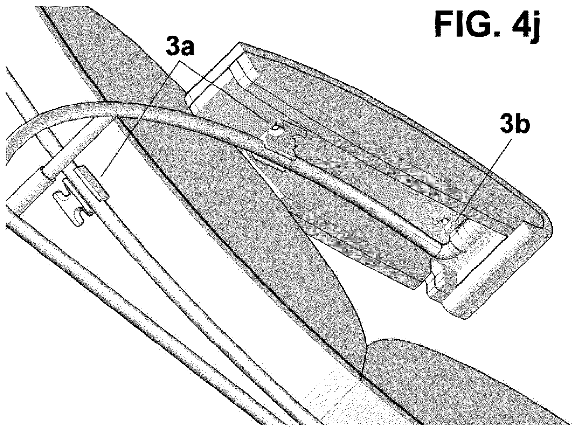

Different embodiment configurations of the structural system can be seen in the attached figures, namely figures 3a to 3d and 4a to 4j. In both configurations, two types of securing pieces, designated as (3a) and (3b), are used in combination, fastened to the boards (1) of the furniture.

The securing pieces (3a) have an open, clip-type configuration, which allows the rods (2) to be inserted laterally by pressure, being retained by means of an elastic fixing. This insertion is performed manually, without tools, and is secured when the rod is pressed into the cavity of the piece, producing a characteristic "click" closure sound that indicates that it is correctly fastened.

Regarding the securing pieces (3b), they have a closed configuration, in the form of a bushing or sleeve, which allows the end of a rod (2) to be inserted axially therein, providing a deeper and guided coupling, suitable for ensuring the precise alignment of the rods.

Both types of securing are used in combination even in the same structural piece of the furniture, as can be seen in the different views shown. The choice between one type of securing or the other depends on the orientation of the rods, the requirements of the assembly and the specific design of each component of the furniture. This flexible arrangement allows the system to be adapted to multiple structural configurations, ensuring precise assembly without additional tools or fastenings.

## Claims

1. A structural system for assembling furniture without tools comprising at least one base (1) configured as a board, seat or backrest and **characterised in that** it comprises:
a plurality of securing pieces (3a, 3b) fastened to the base (1), each comprising at least one insertion area designed to receive metal rods (2);
a series of metal rods (2), with a circular cross-section, which are inserted into said securing pieces (3a, 3b); and
a series of hollow steel tubes, the inner diameter of which fits with the outer diameter of the rods (2), configured to couple over the ends of two adjacent rods (2),
and wherein the connection between rods (2), hollow tubes and securing pieces (3a, 3b) is performed exclusively by manual insertion and pressure, without the need for screws, tools or screwing or welding operations.

2. The structural system for assembling furniture without tools according to claim 1, wherein the rods (2) are made of steel.

3. The structural system for assembling furniture without tools according to claim 1, wherein the rods (2) have a diameter between 8 and 16 millimetres.

4. The structural system for assembling furniture without tools according to claim 1, wherein the rods (2) have a diameter of 12 millimetres.

5. The structural system for assembling furniture without tools according to any of the preceding claims, wherein the ends of the rods (2) have a complementary male and female configuration.

6. The structural system for assembling furniture without tools according to any of the preceding claims, wherein the securing pieces (3a, 3b) are made of injected plastic.

7. The structural system for assembling furniture without tools according to any of the preceding claims, wherein at least one securing piece (3a, 3b) allows the insertion of a rod (2) in a direction perpendicular to the plane of the base (1).

8. The structural system for assembling furniture without tools according to any of the preceding claims, wherein at least one securing piece (3a, 3b) comprises two convex areas to simultaneously insert rods (2) in orthogonal directions.

9. The structural system for assembling furniture without tools according to any of the preceding claims, wherein the securing pieces (3a, 3b) are arranged on the base (1) in configurations that allow rods (2) to be inserted at angles between 80° and 110°.

10. The structural system for assembling furniture without tools according to any of the preceding claims, wherein the hollow tubes are configured to fit simultaneously over the opposite ends of two adjacent rods (2) aligned with each other.
